# EUROPEAN PATENT APPLICATION

(11) **EP 4 797 086 A1**
(43) Date of publication of application: **26.08.2026**
(21) Application number: 24884382.3
(22) Date of filing: 10.10.2024
(51) Int. Cl.: G06F 9/4401

(54) **SECURE BOOT METHOD FOR CHIP, CHIP, ELECTRONIC DEVICE, AND STORAGE MEDIUM**

(30) Priority: 31.10.2023 CN 202311442109
(71) Applicant: HUAWEI TECHNOLOGIES CO., LTD., Shenzhen 518129 (CN)
(72) Inventor: CHEN, Yao, Shenzhen, Guangdong 518129 (CN); ZHAO, Junhua, Shenzhen, Guangdong 518129 (CN); ZUO, Peng, Shenzhen, Guangdong 518129 (CN)
(74) Representative: Goddar, Heinz J.
(86) International application number: PCT/CN2024/123861
(87) International publication number: WO 2025/092378

(57) **Abstract**

This application discloses a secure boot method for a chip, a chip, an electronic device, and a storage medium, and relates to the field of chip technologies. The method includes: In a secure boot process of the chip, a service module transmits two notification messages to a security module to respectively indicate the security module to start and exit a security verification process for image files. After the service module indicates the security module to start the security verification process, the service module starts to continuously transfer the image files to a runtime memory, the security module starts to continuously verify image files that have been transferred to the runtime memory, and the service module indicates the security module to exit the security verification process until all the image files have been transferred to the runtime memory and security verification has been completed. This asynchronous concurrent interaction manner between the service module and the security module not only reduces communication resources between the service module and the security module, but also shortens chip boot duration, thereby greatly improving chip boot performance.

## Description

This application claims priority to Chinese Patent Application No. 202311442109.6, filed on October 31, 2023 and entitled "SECURE BOOT METHOD FOR CHIP, CHIP, ELECTRONIC DEVICE, AND STORAGE MEDIUM", which is incorporated herein by reference in its entirety.

### TECHNICAL FIELD

This application relates to the field of chip technologies, and in particular, to a secure boot method for a chip, a chip, an electronic device, and a storage medium.

### BACKGROUND

A chip is a semiconductor component of an integrated circuit, and is widely used in various smart devices such as a smart terminal device, a smart home device, and a smart vehicle. To ensure security of the chip in a boot process, security verification is usually performed on an image file that needs to be loaded in each phase of the chip boot process, and the corresponding image file is loaded after the verification succeeds.

In a related technology, a security module independent of a service module is deployed on a chip to ensure secure boot of the chip. The security module communicates with the service module based on a system control and management interface (system control and management interface, SCMI), and provides a security verification function for an image file. For example, the plurality of image files in a chip boot process are verified one by one in a synchronous serial manner.

However, because the chip boot process usually involves a large quantity of image files, using the foregoing method leads to the need for multiple communications between the security module and the service module. Consequently, chip boot efficiency is low, and performance is poor.

### SUMMARY

Embodiments of this application provide a secure boot method for a chip, a chip, an electronic device, and a storage medium, to effectively shorten chip boot duration and improve chip boot performance. Technical solutions are as follows.

According to a first aspect, a secure boot method for a chip is provided. A chip in this application includes a service module and a security module independent of the service module. The chip can be applied to various electronic devices such as a smart terminal device, a V2X device, and a physical server. The method includes: After transmitting a first notification message to the security module, the service module starts to transfer a plurality of image files in a memory to a runtime memory of the chip, where the first notification message indicates to start a security verification process for the plurality of image files; the security module receives the first notification message, and performs security verification on an image file that has been transferred to the runtime memory; and the service module transmits a second notification message to the security module, and loads the plurality of image files in the runtime memory if the plurality of image files have been transferred to the runtime memory and security verification on the plurality of image files has been completed, where the second notification message indicates to exit the security verification process.

According to the foregoing method, in a secure boot process of the chip, the service module transmits the two notification messages to the security module to respectively indicate the security module to start and exit the security verification process for the image files. After the service module indicates the security module to start the security verification process, the service module starts to continuously transfer the image files to the runtime memory. It should be understood that this process is continuous, to be specific, after the service module transfers an image file to the runtime memory, it does not wait for the security module to perform security verification on the image file, but proceeds to transfer a next image file. In addition, the security module starts to continuously verify image files that have been transferred to the runtime memory, and the service module indicates the security module to exit the security verification process until all the image files have been transferred to the runtime memory and security verification has been completed. This asynchronous concurrent interaction manner between the service module and the security module not only reduces communication resources between the service module and the security module, but also shortens chip boot duration, thereby greatly improving chip boot performance. For example, the chip is an intelligent driving chip. Because the intelligent driving chip widely uses an advanced process, an internal flash (Flash) memory cannot be implemented. Therefore, the intelligent driving chip usually uses an external flash to implement non-volatile storage. Based on a security requirement, an image file stored in the external flash needs to be encrypted for storage. In this way, in a secure boot process of the intelligent driving chip, the image file stored in the external flash needs to be transferred to the runtime memory, and security verification is performed on the image file. Using the secure boot method provided in this application can greatly shorten the chip boot duration, thereby improving the chip boot performance. It should be understood that this is for reference only. The secure boot method provided in this application can be applied to each chip in which an image file is transferred and security verification is performed in a boot process. This is not limited in this application.

In some embodiments, trusted firmware runs on the service module, secure firmware runs on the security module, and message transmission is performed between the trusted firmware and the secure firmware based on a system control and management interface SCMI to implement a communication connection between the service module and the security module. It can be learned from the foregoing content that the service module and the security module may concurrently perform respective functions, to be specific, a strong coupling relationship between the trusted firmware on the service module and the secure firmware on the security module is reduced, so that function execution of the service module and the security module is independent of each other, thereby improving system robustness.

In some embodiments, that the service module transmits the first notification message to the security module includes: The service module runs the trusted firmware, and sends, based on the SCMI, a first interrupt signal to the secure firmware that runs on the security module, for the security module to obtain the first notification message from a register when receiving the first interrupt signal; and that the service module transmits the second notification message to the security module includes: The service module runs the trusted firmware, and sends, based on the SCMI, a second interrupt signal to the secure firmware that runs on the security module, for the security module to obtain the second notification message from the register when receiving the second interrupt signal. For example, the service module runs the trusted firmware, and after writing, in a message format negotiated with the secure firmware, the first notification message into the register (which may be understood as a mailbox), sends, based on the SCMI standard channel, the first interrupt signal to the secure firmware that runs on the security module, for the security module to obtain the first notification message from the register after receiving the first interrupt signal. A transmission process of the second notification message is similar, and therefore details are not described again.

In some embodiments, the memory is integrated on the chip, or the memory is located outside the chip and is connected to the chip.

In some embodiments, before the service module transmits the first notification message to the security module, the method further includes: The service module creates a task list in a shared memory, where the task list indicates a transfer status of each image file in the plurality of image files, the first notification message indicates that the security verification process is performed based on the task list, and both the service module and the security module have access permission to the shared memory.

In some embodiments, after the service module transfers a first image file indicated by the task list to the runtime memory, the method further includes: The service module updates a transfer status of the first image file in the task list; and
that the security module performs security verification on the image file that has been transferred to the runtime memory includes: The security module reads the transfer status of the first image file in the task list as transfer success, and performs security verification on the first image file.

In some embodiments, after the security module performs security verification on the first image file, the method further includes: The security module updates a security verification result for the first image file to the task list. In this way, because the service module can also access the task list, the service module can learn of the security verification result for the first image file in the task list in time, to provide technical support for determining whether to notify the security module of exiting the security verification process.

In some embodiments, the first notification message includes a storage address of the task list in the shared memory.

In some embodiments, the task list further indicates at least one of the following: a storage address of each image file in the runtime memory, a verification parameter involved in a security verification process of each image file, and a security verification result for each image file.

In some embodiments, the security module includes a security submodule and at least one compute submodule, the security submodule is configured to deliver security verification tasks corresponding to the plurality of image files to the at least one compute submodule, and the at least one compute submodule is configured to execute the security verification tasks corresponding to the plurality of image files.

In some embodiments, the service module is a service core that is in the chip and that is configured to run an operating system, the security submodule is a security core that is in the chip and that is configured to perform secure boot, and the compute submodule is a computation core that is in the chip and that is configured to perform a security verification task.

In some embodiments, that the security module performs security verification on the image file that has been transferred to the runtime memory includes: The security submodule delivers, based on a second image file that has been transferred to the runtime memory and by using a buffer descriptor BD-based first in first out FIFO channel, a security verification task corresponding to the second image file to the at least one compute submodule.

In some embodiments, that the security module performs security verification on the image file that has been transferred to the runtime memory includes:

The security submodule determines, based on a third image file and a fourth image file that have been transferred to the runtime memory, and task execution statuses of a plurality of compute submodules, a first compute submodule and a second compute submodule that are in an idle state in the plurality of compute submodules; and
the security submodule separately delivers, a security verification task corresponding to the third image file and a security verification task corresponding to the fourth image file to the first compute submodule and the second compute submodule, for the first compute submodule and the second compute submodule to concurrently execute the security verification task corresponding to the third image file and the security verification task corresponding to the fourth image file.

In the foregoing manner, the security module can deliver, via the security submodule, security verification tasks of image files to a plurality of compute submodules in an idle state. In this way, a multi-channel hardware acceleration mechanism between the security submodule and the compute submodule in the security module is fully utilized, that is, chip resources are fully utilized. This can greatly improve execution efficiency of the security verification task, and further improve the chip boot performance.

In some embodiments, that the service module transmits the second notification message to the security module, and loads the plurality of image files in the runtime memory if the plurality of image files have been transferred to the runtime memory and security verification on the plurality of image files has been completed includes:
if the service module has transferred the plurality of image files to the runtime memory, and has read security verification results for the plurality of image files, transmitting the second notification message to the security module, and loading the plurality of image files in the runtime memory.

According to a second aspect, an embodiment of this application provides a chip. The chip includes a service module and a security module, and the service module is communicatively connected to the security module;
the service module is configured to: after transmitting a first notification message to the security module, start to transfer a plurality of image files in a memory to a runtime memory of the chip, where the first notification message indicates to start a security verification process for the plurality of image files;
the security module is configured to: receive the first notification message, and perform security verification on an image file that has been transferred to the runtime memory; and
the service module is further configured to: transmit a second notification message to the security module and load the plurality of image files in the runtime memory if the plurality of image files have been transferred to the runtime memory and security verification on the plurality of image files has been completed, where the second notification message indicates to exit the security verification process.

In some embodiments, trusted firmware runs on the service module, secure firmware runs on the security module, and message transmission is performed between the trusted firmware and the secure firmware based on a system control and management interface SCMI to implement a communication connection between the service module and the security module.

In some embodiments, the service module is configured to:
run the trusted firmware, and send, based on the SCMI, a first interrupt signal to the secure firmware that runs on the security module, for the security module to obtain the first notification message from a register when receiving the first interrupt signal; and
run the trusted firmware, and send, based on the SCMI, a second interrupt signal to the secure firmware that runs on the security module, for the security module to obtain the second notification message from the register when receiving the second interrupt signal.

In some embodiments, the memory is integrated on the chip, or the memory is located outside the chip and is connected to the chip.

In some embodiments, the security module includes a security submodule and at least one compute submodule, the security submodule is configured to deliver security verification tasks corresponding to the plurality of image files to the at least one compute submodule, and the at least one compute submodule is configured to execute the security verification tasks corresponding to the plurality of image files.

In some embodiments, the service module is a service core that is in the chip and that is configured to run an operating system, the security submodule is a security core that is in the chip and that is configured to perform secure boot, and the compute submodule is a computation core that is in the chip and that is configured to perform a security verification task.

According to a third aspect, an embodiment of this application provides an electronic device. The electronic device includes a chip, the chip includes a service module and a security module, and the chip is configured to implement the chip secure boot method provided in any one of the first aspect or the optional manners of the first aspect.

According to a fourth aspect, an embodiment of this application provides a computer-readable storage medium. The computer-readable storage medium is configured to store at least one segment of program code, and the at least one segment of program code is used to implement the chip secure boot method provided in any one of the first aspect or the optional manners of the first aspect. The storage medium includes but is not limited to a volatile memory, for example, a random access memory, or a non-volatile memory, for example, a flash memory, a hard disk drive (hard disk drive, HDD), or a solid-state drive (solid-state drive, SSD).

According to a fifth aspect, an embodiment of this application provides a computer program product. When the computer program product runs on a chip, the chip is enabled to implement the chip secure boot method provided in any one of the first aspect or the optional manners of the first aspect. The computer program product may be a software installation package. When a function of the chip needs to be implemented, the computer program product may be downloaded, and the computer program product may be executed on the chip.

### BRIEF DESCRIPTION OF DRAWINGS

FIG. 1 is a diagram of a secure boot process of a chip;
FIG. 2 is a diagram of an implementation environment according to an embodiment of this application;
FIG. 3 is a diagram of a structure of a chip according to an embodiment of this application;
FIG. 4 is a diagram of a structure of an electronic device according to an embodiment of this application;
FIG. 5 is a flowchart of a secure boot method for a chip according to an embodiment of this application;
FIG. 6 is a diagram of a structure of a task list according to an embodiment of this application;
FIG. 7 is a diagram of a secure boot method for a chip according to an embodiment of this application; and
FIG. 8 is a diagram of a structure of a secure boot apparatus for a chip according to an embodiment of this application.

### DESCRIPTION OF EMBODIMENTS

To make the objectives, technical solutions, and advantages of this application clearer, the following further describes implementations of this application in detail with reference to accompanying drawings. It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, the image file and the like in this application are all obtained in a case of full authorization.

For ease of understanding, the following first describes key terms and key concepts in this application.

An image file is a file similar to a rar or zip compressed file, where a specific series of files are made into a single file in a specific format for a user to download and use, for example, an operating system image or a game image. The image file may be recognized and burned to an optical disc by specific software.

A system control and management interface (system control and management interface, SCMI) is a group of software interfaces independent of an operating system for system management. A principle of the SCMI is to provide a common communication interface for the operating system, a virtual machine, firmware, and hardware by defining a set of commands, messages, and data structures.

The firmware may have different definitions, and all appropriate interpretations in the computer field are applicable to this application. For example, the firmware may be interpreted as a program that is pre-installed in a read-only memory inside a hardware product and that is bound to and performs matching with the hardware product. For example, a basic input/output system (basic input/output system, BIOS) of a computer belongs to a type of firmware. The firmware may alternatively be interpreted as a program running in a "non-control processor". The "non-control processor" is a processor that indirectly runs the operating system, for example, a processor in a peripheral device. Alternatively, the "non-control processor" may refer to some cores inside a processor that are used for a bare metal (bare metal) virtual machine system. The firmware may alternatively be interpreted as an operating system that does not support dynamic installation of an application and an executable file that does not support dynamic installation of an application. It should be noted that the foregoing interpretations are merely examples for description, and should not be considered as a limitation on the technical solutions of this application.

The following describes an application scenario and an implementation environment in this application.

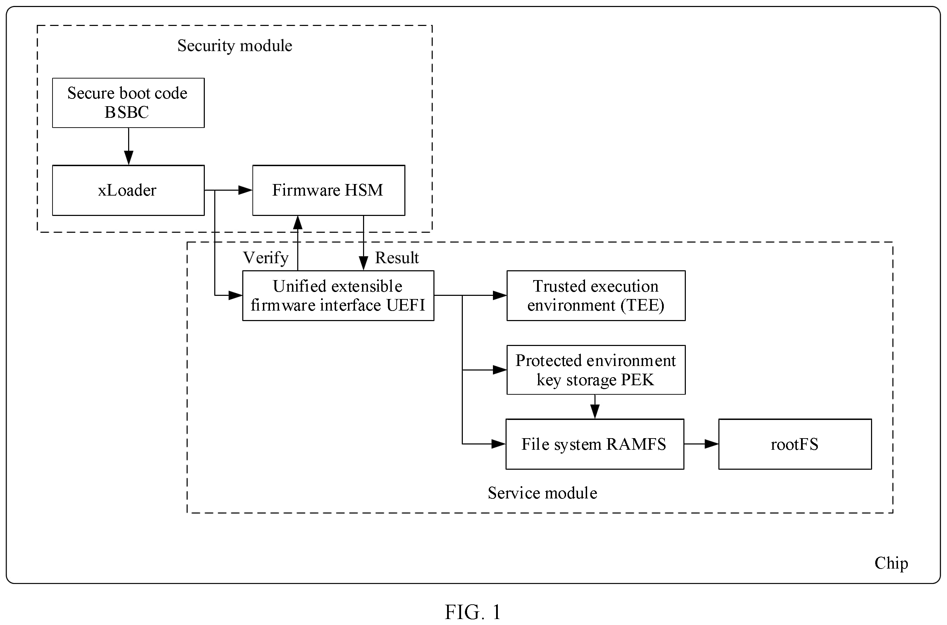

The technical solutions provided in embodiments of this application can be applied to a secure boot process of a chip. For example, FIG. 1 is a diagram of a secure boot process of a chip. As shown in FIG. 1, a security module independent of a service module is deployed on the chip. After the chip is powered on and booted, the security module executes secure boot code (BootROM security boot code, BSBC) to enter the secure boot process. After BSBC verification succeeds, an xLoader program (a user program) is guided to be booted, and service module firmware HBOOT2 and security module firmware hardware security module (hardware security module, HSM) in an xLoader boot process are verified and loaded. The service module firmware HBOOT2 includes ARM trusted firmware (ARM trusted firmware, ATF) and a unified extensible firmware interface (unified extensible firmware interface, UEFI). In a UEFI loading phase, a plurality of to-be-loaded image files are involved, such as a file system RAMFS (for example, a rootFS), a trusted execution environment operating system (trusted execution environment operating system, TEEOS), and protected environment key storage (protected environment key storing, PEK) (generally used for configuration of a virtual machine and each used core). After the plurality of image files are transferred from a non-volatile memory to a runtime memory of the chip, and the corresponding image files are loaded after security verification is performed on the plurality of image files, to complete chip boot. It should be understood that, to ensure security of an image file, when producing a chip, a manufacturer usually encrypts the image file, and uses a trusted signature system (for example, a certificate authority) to perform digital signature on the image file. Therefore, in a boot process of the chip, decryption and signature verification need to be performed on the encrypted image file, that is, security verification is performed.

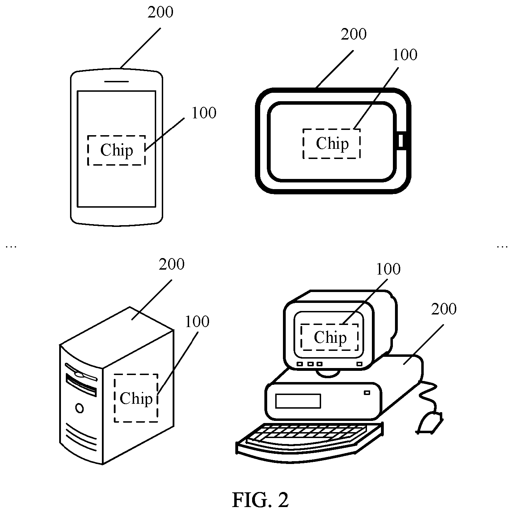

Based on this, this application provides a secure boot method for a chip, to accelerate a secure boot process of the chip and improve chip boot performance. The chip in this application includes a service module and a security module independent of the service module, and the chip can be applied to various electronic devices. FIG. 2 is a diagram of an implementation environment according to an embodiment of this application. As shown in FIG. 2, a chip 100 in this application can be applied to various electronic devices 200.

For example, the electronic device 200 is a smart terminal device, for example, a mobile terminal device like a mobile phone, a tablet computer, a wearable device, a vehicle-mounted device, an augmented reality (augmented reality, AR), a virtual reality (virtual reality, VR) device, a notebook computer, an ultra-mobile personal computer (ultra-mobile personal computer, UMPC), a netbook, or a personal digital assistant (personal digital assistant, PDA).

In some embodiments, the electronic device 200 may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). The electronic device 200 may alternatively be a B2C device, a B2B device, or the like. This application is not limited thereto.

In some embodiments, the electronic device 200 may alternatively be an independent physical server, a server cluster or a distributed file system including a plurality of physical servers, a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform, or the like. This application is not limited thereto.

In addition, the electronic device 200 in this application can access a wired network or a wireless network. For example, the wireless network or the wired network uses a standard communication technology and/or protocol. The network includes but is not limited to any combination of a data center network (data center network), a storage area network (storage area network, SAN), a local area network (local area network, LAN), a metropolitan area network (metropolitan area network, MAN), a wide area network (wide area network, WAN), a mobile, wired, or wireless network, a private network, or a virtual private network. In some implementations, technologies and/or formats including a hypertext markup language (hypertext markup language, HTML), an extensible markup language (extensible markup language, XML), and the like are used to represent data exchanged via the network. In addition, all or a part of links can be encrypted by using conventional encryption technologies such as a secure sockets layer (secure sockets layer, SSL), transport layer security (transport layer security, TLS), a virtual private network (virtual private network, VPN), and internet protocol security (internet protocol security, IPsec). In some other embodiments, customized and/or dedicated data communication technologies can alternatively be used to replace or supplement the foregoing data communication technology.

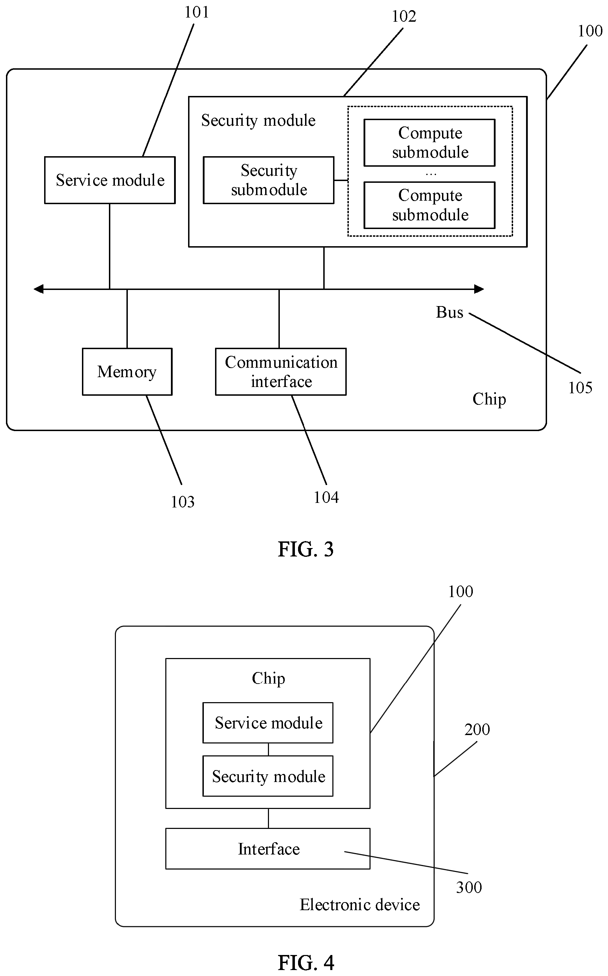

The following describes a structure of the chip 100 with reference to FIG. 3.

FIG. 3 is a diagram of a structure of a chip according to an embodiment of this application. As shown in FIG. 3, the chip 100 includes a service module 101, a security module 102, a memory 103, a communication interface 104, and a bus 105. The service module 101, the security module 102, the memory 103, and the communication interface 104 implement a communication connection with each other by using the bus 105.

The service module 101 is configured to run an operating system to provide a corresponding service. The service module 101 is, for example, a core (core) of a central processing unit (central processing unit, CPU), that is, an arithmetic logic unit (arithmetic logic unit, ALU), or referred to as a control unit (control unit, CU). This is not limited in this application. In some embodiments, the service module 101 is also referred to as a service core, a primary core, a main control core, or the like. This application is not limited thereto. In this embodiment of this application, the service module 101 runs trusted firmware, and is configured to: in a boot process of the chip 100, transfer a to-be-loaded image file, indicate the security module 102 to start a security verification process for the image file, indicate the security module 102 to exit the security verification process for the image file, and the like. For example, the trusted firmware is ARM trusted firmware (ARM trusted firmware, ATF).

The security module 102 is configured to deploy high-security applications such as secure boot, secure update of software/firmware/key/certificate, and key management. In some embodiments, the security module 102 includes a security submodule and at least one compute submodule, and the security submodule is communicatively connected to the at least one compute submodule. In some embodiments, the security module 102 is referred to as a high-security subsystem, and the security module 102 starts and runs a main system independent of the chip 100.

The security submodule is configured to deliver a security verification task for the image file to the at least one compute submodule. For example, the security submodule is, for example, a core of the CPU. In some embodiments, the security submodule is also referred to as a security core, a high-security core, or the like. This is not limited in this application. In this embodiment of this application, the security submodule of the security module 102 runs secure firmware, and is configured to: in the boot process of the chip 100, start the security verification process for the image file based on an indication of the service module 101, and exit the security verification process for the image file. For example, the secure firmware is a hardware security module (hardware security module, HSM).

The at least one compute submodule is configured to perform the security verification task for the image file. For example, the compute submodule is a core of the CPU. In some embodiments, the compute submodule is also referred to as a computation core or a security algorithm core (security algorithm core, SAC), and is configured to perform the security verification task corresponding to the image file, for example, a decryption task, a digest computation task, or a signature verification task. This application is not limited thereto. It should be understood that a quantity of compute submodules is not limited in this application. There may be one or more compute submodules. For example, when there are a plurality of compute submodules, a plurality of compute submodules in an idle state can concurrently execute the security verification task, thereby improving chip boot performance.

The memory 103 includes a double data rate (double data rate, DDR) memory, a static random access memory (static random access memory, SRAM), or another type of dynamic storage device that can store information and instructions, or further includes any other medium that can be used to carry or store expected program code in a form of an instruction or a data structure and that can be accessed by a computer, but is not limited thereto. In this embodiment of this application, a runtime memory of the chip 100 is implemented by using at least one of the foregoing memories. This is not limited in this application. The runtime memory is a memory required for running a program. In addition, a shared memory of the chip 100 is implemented by using at least one of the foregoing memories. This is not limited in this application. For example, both the service module 101 and the security module 102 have access permission to the shared memory. In this application, the shared memory may also be understood as a secure memory, and is configured to store related information that needs to be securely stored in the boot process of the chip 100. For example, the runtime memory and the shared memory of the chip 100 may be different memory spaces on a same DDR. A memory allocation manner related to the chip 100 is not limited in this application, and memory allocation can be performed based on a requirement in actual application. In some embodiments, the chip 100 further includes a non-volatile memory (non-volatile memory, NVM), for example, a universal flash storage (universal flash storage, UFS) or an embedded multimedia card (embedded multimedia card, EMMC). This application is not limited thereto. The non-volatile memory is configured to store the image file to be loaded in the boot process of the chip 100. In some other embodiments, the non-volatile memory is located outside the chip 100 and is connected to the chip 100. This application is not limited thereto.

The communication interface 104 is configured to provide program instructions and/or data. The communication interface 104 includes a peripheral component interconnect express (peripheral component interconnect express, PCIe) communication interface, another universal peripheral interface, and the like. This is not limited in this application. For example, the chip 100 implements communication between the chip 100 and another device or a communication network through a peripheral interface.

The bus 105 may include a path for transmitting information between components (for example, the service module 101, the security module 102, the memory 103, and the communication interface 104) of the chip 100.

It should be noted that FIG. 3 is merely a diagram of a hardware structure that can be configured as the chip 100 according to this application. In some embodiments, the chip may further include another component, to implement more functions. This application is not limited thereto.

In addition, an embodiment of this application further provides an electronic device. FIG. 4 is a diagram of a structure of an electronic device according to an embodiment of this application. As shown in FIG. 4, the electronic device 200 includes a chip 100 and an interface 300. The chip 100 includes a service module and a security module. The interface 300 is configured to exchange instructions with the outside of the electronic device 200. The chip 100 is configured to implement a secure boot method for a chip provided in the following method embodiment.

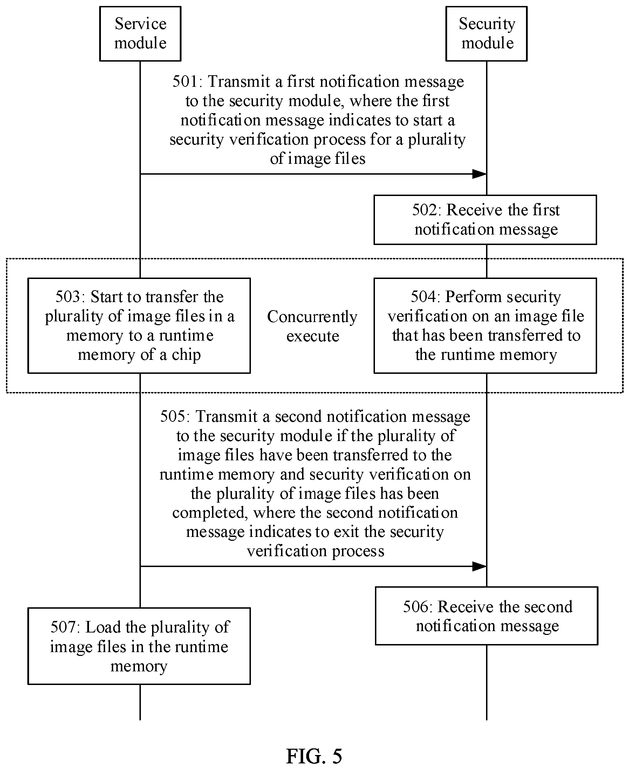

The following describes the secure boot method for the chip provided in this application with reference to FIG. 5.

FIG. 5 is a flowchart of a secure boot method for a chip according to an embodiment of this application. As shown in FIG. 5, the method is applied to a chip 100. The chip 100 includes a service module and a security module. Interaction between the service module and the security module is used as an example. The method includes the following step 501 to step 507.

501: The service module transmits a first notification message to the security module, where the first notification message indicates to start a security verification process for a plurality of image files.

In this embodiment of this application, after the chip is powered on or rebooted, a boot program is executed (for this phase, refer to the content shown in FIG. 1, and details are not described herein again) to enter a UEFI loading phase. The service module transmits the first notification message to the security module, to indicate the security module to start the security verification process for the plurality of image files. In some embodiments, the service module runs trusted firmware, and sends, based on an SCMI, a first interrupt signal to secure firmware that runs on the security module, for the security module to obtain the first notification message from a register when receiving the first interrupt signal. For example, the first interrupt signal is a doorbell interrupt, and message transmission is performed between the trusted firmware and the secure firmware based on the SCMI standard channel. For example, the service module runs the trusted firmware, and after writing, in a message format negotiated with the secure firmware, the first notification message into the register (which may be understood as a mailbox), sends, based on the SCMI standard channel, the first interrupt signal to the secure firmware that runs on the security module, for the security module to obtain the first notification message from the register after receiving the first interrupt signal.

In some embodiments, the service module creates a task list in a shared memory. The task list indicates a transfer status of each image file in the plurality of image files. Correspondingly, the first notification message indicates the security verification process based on the task list. Both the service module and the security module have access permission to the shared memory, and the transfer status indicates whether the image file has been transferred from a memory to a runtime memory of the chip. For example, the transfer status is represented by using a preset flag bit. This application is not limited thereto. For example, the first notification message includes a storage address of the task list in the shared memory. Because both the service module and the security module can access the shared memory, when receiving the first notification message, the security module can read the transfer status of each image file in the task list based on the storage address of the task list in the shared memory, and perform security verification on an image file that has been transferred to the runtime memory. This process may also be understood as a process of delivering the task list.

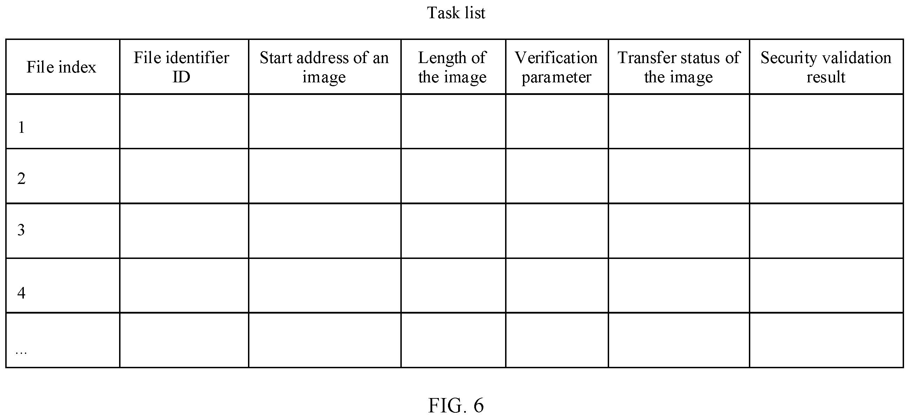

For example, FIG. 6 is a diagram of a structure of a task list according to an embodiment of this application. As shown in FIG. 6, the task list includes a file index and a file identifier ID of each image file, a storage address (including a start address and a length) of the image file in a runtime memory, a transfer status of the image file, a verification parameter (for example, a related parameter related to decryption, signature verification, or digest computation) involved in a security verification process, a security verification result, and the like. This application is not limited thereto. It should be noted that "..." in the task list shown in FIG. 6 indicates omission.

502: The security module receives the first notification message.

In this embodiment of this application, the security module receives the first notification message, and returns, to the service module, a notification message indicating that the first notification message is successfully received.

In some embodiments, for example, the service module transmits the first notification message based on the SCMI. When receiving the first interrupt signal, the security module obtains the first notification message from the register.

In some embodiments, for example, the service module delivers the task list to the security module. The first notification message includes the storage address of the task list in the shared memory. Correspondingly, the security module can read the transfer status of each image file in the task list based on the storage address of the task list in the shared memory, and perform security verification on the image file that has been transferred to the runtime memory, that is, start a security verification process for the image file.

503: The service module starts to transfer the plurality of image files in the memory to the runtime memory of the chip.

In this embodiment of this application, the memory stores the plurality of to-be-loaded image files in the boot process of the chip. A type of the image file is not limited in this application. In some embodiments, the memory is integrated on the chip, or the memory is located outside the chip and is connected to the chip. A deployment manner of the memory is not limited in this application. For example, the memory is a non-volatile memory. For example, after transmitting the first notification message to the security module, the service module runs the trusted firmware, and starts to transfer the plurality of image files stored in the memory to the runtime memory of the chip, in other words, copies the plurality of image files to the runtime memory. It should be understood that this process is continuous, to be specific, after the service module transfers an image file to the runtime memory, it does not wait for the security module to perform security verification on the image file, but proceeds to transfer a next image file.

In some embodiments, for example, the service module delivers the task list to the security module. For any image file (referred to as a first image file below), after transferring the first image file from the memory to the runtime memory, the service module updates a transfer status of the first image file in the task list, to be specific, updates the transfer status of the first image file to transfer success. For example, the transfer status is represented by using a preset flag bit. This process may also be understood as a process of setting a transfer flag bit. For example, after transferring the first image file to the runtime memory, the service module updates other related information of the first image file in the task list, for example, a storage address of the first image file in the runtime memory and a verification parameter involved in a security verification process. This application is not limited thereto.

504: The security module performs security verification on the image file that has been transferred to the runtime memory.

In this embodiment of this application, step 504 and step 503 are concurrently performed. To be specific, in a process in which the service module transfers the plurality of image files to the runtime memory, the security module runs the secure firmware, and performs, based on transfer statuses of the plurality of image files, security verification on the image file that has been transferred to the runtime memory. In some embodiments, for example, the service module delivers the task list to the security module. For any image file (the first image file is still used as an example), if the service module transfers the first image file from the memory to the runtime memory, the service module updates the storage address of the first image file in the runtime memory to a page of the task list, and updates the transfer status of the first image file in the task list. In this case, the security module reads the transfer status of the first image file in the task list as transfer success, performs security verification on the first image file, and updates a security verification result for the first image file to the task list. For example, the security module reads the transfer status of each image file in the task list according to a polling mechanism. This is not limited in this application.

It can be learned from the chip structure shown in FIG. 3 that the security module includes a security submodule and at least one compute submodule. The security submodule is configured to deliver security verification tasks corresponding to the plurality of image files to the at least one compute submodule. The at least one compute submodule is configured to execute the security verification tasks corresponding to the plurality of image files. The security verification task includes a decryption task, a digest computation task (that is, a hash computation task), a signature verification task, or the like for the image file. This application is not limited thereto. For example, in this step, for any image file (referred to as a second image file below) that has been transferred to the runtime memory, the security submodule runs the secure firmware, and delivers, to the at least one compute submodule, a security verification task corresponding to the second image file. For example, the security submodule delivers, based on the second image file and by using a buffer descriptor (buffer descriptor, BD)-based first in first out (first in first out, FIFO) channel, the security verification task corresponding to the second image file to the at least one compute submodule. The FIFO is a first in first out data buffer. The security submodule fills, in a BD format, a storage address of the second image file in the runtime memory and a verification parameter involved in the security verification process into a BD table of the shared memory, and sends a BD address to the compute submodule through the FIFO channel. After receiving the BD address, the compute submodule reads the BD table, obtains the storage address of the second image file in the runtime memory and the verification parameter involved in the security verification process, executes the corresponding security verification task, and updates a security verification result to the page of the task list.

In some embodiments, if the security module includes a plurality of compute submodules, the plurality of compute submodules in an idle state can concurrently execute a plurality of security verification tasks. For example, the security submodule determines, based on a third image file and a fourth image file that have been transferred to the runtime memory and task execution statuses of the plurality of compute submodules, a first compute submodule and a second compute submodule that are in an idle state in the plurality of compute submodules. The security submodule separately delivers a security verification task corresponding to the third image file and a security verification task corresponding to the fourth image file to the first compute submodule and the second compute submodule, for the first compute submodule and the second compute submodule to concurrently execute the security verification task corresponding to the third image file and the security verification task corresponding to the fourth image file. This process may also be understood as a process in which the security submodule delivers the security verification task based on task execution saturation of the compute submodule. In this way, a multi-channel hardware acceleration mechanism between the security submodule and the compute submodule is fully utilized, that is, chip resources are fully utilized. This can greatly improve execution efficiency of the security verification task, and further improve chip boot performance. It should be noted that execution logic of delivering, by the security submodule, the security verification task to the compute submodule is not limited in this application. For example, the security submodule may check whether task channels of the plurality of compute submodules are saturated. If the task channels are saturated, the security submodule performs polling check to determine whether execution of tasks are completed. If execution of a task is completed, it indicates that there is a compute submodule in an idle state, and the task is delivered to the compute submodule, to ensure that a task channel is in a saturated state. If all the tasks are delivered, the security submodule performs polling check to determine whether execution of the tasks is completed.

In some embodiments, the security submodule delivers the security verification task to the at least one compute submodule based on a priority of the security verification task. A higher priority of the security verification task indicates longer execution time. For example, the security submodule preferentially delivers a hash computation task to the at least one compute submodule. In this way, computing resources of the compute submodule can be fully utilized, and task execution efficiency can be improved. This is not limited in this application.

It should be understood that, because step 503 and step 504 are concurrently performed, the service module and the security module may concurrently perform respective functions, to be specific, a strong coupling relationship between the trusted firmware on the service module and the secure firmware on the security module is reduced, so that function execution of the service module and the security module is independent of each other, thereby improving system robustness.

505: The service module transmits a second notification message to the security module if the plurality of image files have been transferred to the runtime memory and security verification on the plurality of image files has been completed, where the second notification message indicates to exit the security verification process.

In this embodiment of this application, if the service module has transferred the plurality of image files to the runtime memory, and reads security verification results for the plurality of image files, the service module transmits the second notification message to the security module. For example, the task list in the shared memory stores the security verification results for the plurality of image files. If the service module reads the security verification results for the plurality of image files from the task list, the service module transmits the second notification message to the security module.

In some embodiments, the service module runs the trusted firmware, and sends, based on the SCMI, a second interrupt signal to the secure firmware that runs on the security module, for the security module to obtain the second notification message from the register when receiving the second interrupt signal. For example, the second interrupt signal is a doorbell interrupt, and message transmission is performed between the trusted firmware and the secure firmware based on the SCMI. For example, the service module runs the trusted firmware, and after writing, in the message format negotiated with the secure firmware, the second notification message into the register (which may be understood as the mailbox), sends, based on the SCMI, the second interrupt signal to the secure firmware that runs on the security module, for the security module to obtain the second notification message from the register after receiving the second interrupt signal.

506: The security module receives the second notification message.

In this embodiment of this application, the security module receives the second notification message, and returns, to the service module, a notification message indicating that the second notification message is successfully received. In some embodiments, for example, the service module transmits the second notification message based on the SCMI. When receiving the second interrupt signal, the security module obtains the second notification message from the register, and exits the security verification process.

507: The service module loads the plurality of image files in the runtime memory.

In this embodiment of this application, the service module loads the plurality of image files in the runtime memory, to complete secure boot of the chip.

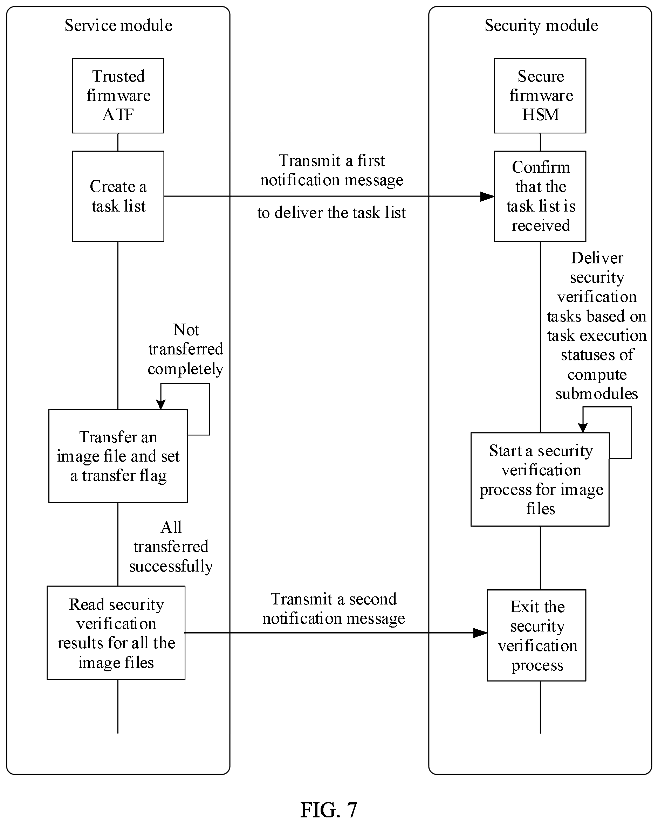

The following describes step 501 to step 507 by using an example with reference to FIG. 7. FIG. 7 is a diagram of a secure boot method for a chip according to an embodiment of this application. As shown in FIG. 7, for example, a service module runs trusted firmware ATF and a security module runs secure firmware HSM. The secure boot method for the chip includes the following steps.

Step 1: After the chip is powered on or restarted, the ATF and the HSM are initialized, and the ATF transmits a first notification message to the HSM to deliver a task list, that is, notifies the HSM of a storage address of the task list in a shared memory.

Step 2: The HSM receives the first notification message, and confirms that the task list has been received.

Step 3: The ATF starts to transfer a plurality of image files in a memory to a runtime memory of the chip, and each time an image file is transferred, updates a transfer status of the corresponding image file in the task list and a storage address of the image file in the runtime memory, until all the plurality of image files are successfully transferred.

Step 4: The HSM starts a security verification process, performs security verification on an image file that has been transferred to the runtime memory, and delivers security verification tasks to a plurality of compute submodules in an idle state based on task execution statuses of the plurality of compute submodules, so that the plurality of compute submodules concurrently execute the task.

Step 5: If the ATF has transferred the plurality of image files to the runtime memory, and reads security verification results for the plurality of image files from the task list, the ATF transmits a second notification message to the HSM, that is, notifies the HSM of exiting the security verification process.

It can be learned from the secure boot method for the chip shown in FIG. 5 to FIG. 7 that, in a secure boot process of the chip, the service module transmits the two notification messages to the security module to respectively indicate the security module to start and exit the security verification process for the image files. After the service module indicates the security module to start the security verification process, the service module starts to continuously transfer the image files to the runtime memory of the chip, the security module starts to continuously verify image files that have been transferred to the runtime memory, and the service module indicates the security module to exit the security verification process until all the image files have been transferred to the runtime memory and security verification has been completed. This asynchronous concurrent interaction manner between the service module and the security module not only reduces communication resources between the service module and the security module, but also shortens chip boot duration, thereby greatly improving the chip boot performance. In addition, the service module and the security module concurrently perform the respective functions, to be specific, the strong coupling relationship between the trusted firmware on the service module and the secure firmware on the security module is reduced, so that function execution of the service module and the security module is independent of each other, and the security verification result is finally verified, thereby improving the system robustness. In addition, the security module can deliver, via the security submodule, security verification tasks of the image files to the plurality of compute submodules in the idle state. In this way, the multi-channel hardware acceleration mechanism between the security submodule and the compute submodule in the security module is fully utilized, that is, the chip resources are fully utilized. This can greatly improve the execution efficiency of the security verification task, and further improve the chip boot performance.

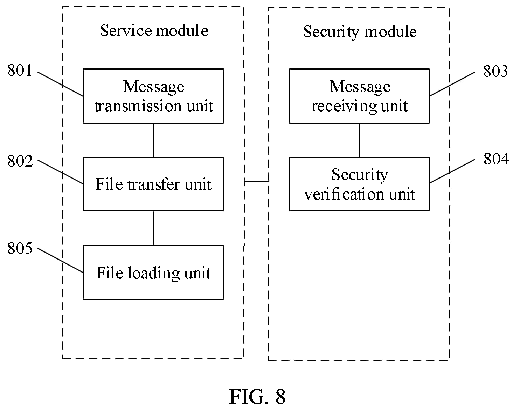

This application further provides a secure boot apparatus for a chip. FIG. 8 is a diagram of a structure of a secure boot apparatus for a chip according to an embodiment of this application. The apparatus can implement the steps performed by the chip in the foregoing method embodiment. For example, the apparatus includes a message transmission unit 801, a file transfer unit 802, a message receiving unit 803, a security verification unit 804, and a file loading unit 805, where the message transmission unit 801, the file transfer unit 802, and the file loading unit 805 are configured in a service module of the chip, the message receiving unit 803 and the security verification unit 804 are configured in a security module of the chip, and the service module is communicatively connected to the security module.

The message transmission unit 801 is configured to transmit a first notification message to the security module, where the first notification message indicates to start a security verification process for a plurality of image files.

The file transfer unit 802 is configured to transfer the plurality of image files in a memory to a runtime memory of the chip.

The message receiving unit 803 is configured to receive the first notification message.

The security verification unit 804 is configured to perform security verification on an image file that has been transferred to the runtime memory.

The message transmission unit 801 is further configured to: transmit a second notification message to the security module if the plurality of image files have been transferred to the runtime memory and security verification on the plurality of image files has been completed, where the second notification message indicates to exit the security verification process.

The file loading unit 805 is configured to load the plurality of image files in the runtime memory.

In some embodiments, the message transmission unit 801, the file transfer unit 802, the message receiving unit 803, the security verification unit 804, and the file loading unit 805 are further configured to collaboratively implement other steps performed by the service module and the security module in the embodiment shown in FIG. 5. It should be understood that when the apparatus provided in the foregoing embodiment performs secure boot of the chip, division into the foregoing functional units is merely used as an example for description. In actual application, the foregoing functions may be allocated to different functional units for implementation based on a requirement, that is, an internal structure of the apparatus is divided into different functional units to implement all or some of the functions described above. In addition, the secure boot apparatus for the chip provided in the foregoing embodiment and the embodiment of the secure boot method for the chip belong to a same concept. For a specific implementation process, refer to the method embodiment. Details are not described herein again.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, without departing from the scope of the various examples, the first notification message may be referred to as the second notification message, and similarly, the second notification message may be referred to as the first notification message. Both the first notification message and the second notification message may be notification messages, and in some cases, may be separate and different notification messages.

The term "at least one" in this application means one or more, and the term "a plurality of" in this application means two or more. For example, a plurality of notification messages mean two or more notification messages.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, all or a part of embodiments may be implemented in a form of program structure information. The program structure information includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A secure boot method for a chip, wherein the chip comprises a service module and a security module, the service module is communicatively connected to the security module, and the method comprises:
after transmitting a first notification message to the security module, starting, by the service module, to transfer a plurality of image files in a memory to a runtime memory of the chip, wherein the first notification message indicates to start a security verification process for the plurality of image files;
receiving, by the security module, the first notification message, and performing security verification on an image file that has been transferred to the runtime memory; and
transmitting, by the service module, a second notification message to the security module, and loading the plurality of image files in the runtime memory if the plurality of image files have been transferred to the runtime memory and security verification on the plurality of image files has been completed, wherein the second notification message indicates to exit the security verification process.

2. The method according to claim 1, wherein trusted firmware runs on the service module, secure firmware runs on the security module, and message transmission is performed between the trusted firmware and the secure firmware based on a system control and management interface SCMI to implement the communication connection between the service module and the security module.

3. The method according to claim 2, wherein
that the service module transmits the first notification message to the security module comprises: running, by the service module, the trusted firmware, and sending, based on the SCMI, a first interrupt signal to the secure firmware that runs on the security module, for the security module to obtain the first notification message from a register when receiving the first interrupt signal; and
transmitting, by the service module, the second notification message to the security module comprises: running, by the service module, the trusted firmware, and sending, based on the SCMI, a second interrupt signal to the secure firmware that runs on the security module, for the security module to obtain the second notification message from the register when receiving the second interrupt signal.

4. The method according to any one of claims 1 to 3, wherein the memory is integrated on the chip, or the memory is located outside the chip and is connected to the chip.

5. The method according to any one of claims 1 to 4, wherein before the service module transmits the first notification message to the security module, the method further comprises:
creating, by the service module, a task list in a shared memory, wherein the task list indicates a transfer status of each image file in the plurality of image files, the first notification message indicates that the security verification process is performed based on the task list, and both the service module and the security module have access permission to the shared memory.

6. The method according to claim 5, wherein after the service module transfers a first image file indicated by the task list to the runtime memory, the method further comprises:
updating, by the service module, a transfer status of the first image file in the task list; and
performing, by the security module, security verification on the image file that has been transferred to the runtime memory comprises: reading, by the security module, the transfer status of the first image file in the task list as transfer success, and performing security verification on the first image file.

7. The method according to claim 6, wherein after performing, by the security module, security verification on the first image file, the method further comprises:
updating, by the security module, a security verification result for the first image file to the task list.

8. The method according to any one of claims 5 to 7, wherein the first notification message comprises a storage address of the task list in the shared memory.

9. The method according to any one of claims 5 to 8, wherein the task list further indicates at least one of the following: a storage address of each image file in the runtime memory, a verification parameter involved in a security verification process of each image file, and a security verification result for each image file.

10. The method according to any one of claims 1 to 9, wherein the security module comprises a security submodule and at least one compute submodule, the security submodule is configured to deliver security verification tasks corresponding to the plurality of image files to the at least one compute submodule, and the at least one compute submodule is configured to execute the security verification tasks corresponding to the plurality of image files.

11. The method according to claim 10, wherein the service module is a service core that is in the chip and that is configured to run an operating system, the security submodule is a security core that is in the chip and that is configured to perform secure boot, and the compute submodule is a computation core that is in the chip and that is configured to perform a security verification task.

12. The method according to claim 10 or 11, wherein
performing, by the security module, security verification on the image file that has been transferred to the runtime memory comprises: delivering, by the security submodule based on a second image file that has been transferred to the runtime memory and by using a buffer descriptor BD-based first in first out FIFO channel, a security verification task corresponding to the second image file to the at least one compute submodule.

13. The method according to any one of claims 10 to 12, wherein
performing, by the security module, security verification on the image file that has been transferred to the runtime memory comprises:
determining, by the security submodule based on a third image file and a fourth image file that have been transferred to the runtime memory, and task execution statuses of a plurality of compute submodules, a first compute submodule and a second compute submodule that are in an idle state in the plurality of compute submodules; and
separately delivering, by the security submodule, a security verification task corresponding to the third image file and a security verification task corresponding to the fourth image file to the first compute submodule and the second compute submodule, for the first compute submodule and the second compute submodule to concurrently execute the security verification task corresponding to the third image file and the security verification task corresponding to the fourth image file.

14. The method according to any one of claims 1 to 13, wherein
transmitting, by the service module, the second notification message to the security module, and loading the plurality of image files in the runtime memory if the plurality of image files have been transferred to the runtime memory and security verification on the plurality of image files has been completed comprises:
if the service module has transferred the plurality of image files to the runtime memory, and has read security verification results for the plurality of image files, transmitting the second notification message to the security module, and loading the plurality of image files in the runtime memory.

15. A chip, wherein the chip comprises a service module and a security module, and the service module is communicatively connected to the security module;
the service module is configured to: after transmitting a first notification message to the security module, start to transfer a plurality of image files in a memory to a runtime memory of the chip, wherein the first notification message indicates to start a security verification process for the plurality of image files;
the security module is configured to: receive the first notification message, and perform security verification on an image file that has been transferred to the runtime memory; and
the service module is further configured to: transmit a second notification message to the security module and load the plurality of image files in the runtime memory if the plurality of image files have been transferred to the runtime memory and security verification on the plurality of image files has been completed, wherein the second notification message indicates to exit the security verification process.

16. The chip according to claim 15, wherein trusted firmware runs on the service module, secure firmware runs on the security module, and message transmission is performed between the trusted firmware and the secure firmware based on a system control and management interface SCMI to implement the communication connection between the service module and the security module.

17. The chip according to claim 16, wherein
the service module is configured to:
run the trusted firmware, and send, based on the SCMI, a first interrupt signal to the secure firmware that runs on the security module, for the security module to obtain the first notification message from a register when receiving the first interrupt signal; and
run the trusted firmware, and send, based on the SCMI, a second interrupt signal to the secure firmware that runs on the security module, for the security module to obtain the second notification message from the register when receiving the second interrupt signal.

18. The chip according to any one of claims 15 to 17, wherein the memory is integrated on the chip, or the memory is located outside the chip and is connected to the chip.

19. The chip according to any one of claims 15 to 18, wherein the security module comprises a security submodule and at least one compute submodule, the security submodule is configured to deliver security verification tasks corresponding to the plurality of image files to the at least one compute submodule, and the at least one compute submodule is configured to execute the security verification tasks corresponding to the plurality of image files.

20. The chip according to claim 19, wherein the service module is a service core that is in the chip and that is configured to run an operating system, the security submodule is a security core that is in the chip and that is configured to perform secure boot, and the compute submodule is a computation core that is in the chip and that is configured to perform a security verification task.

21. An electronic device, wherein the electronic device comprises a chip, the chip comprises a service module and a security module, and the chip is configured to implement the chip secure boot method according to any one of claims 1 to 14.

22. A computer-readable storage medium, wherein the computer-readable storage medium is configured to store at least one segment of program code, and the at least one segment of program code is used to implement the chip secure boot method according to any one of claims 1 to 14.

23. A computer program product, wherein when the computer program product runs on a chip, the chip is enabled to implement the chip secure boot method according to any one of claims 1 to 14.
